# EUROPÄISCHE PATENTANMELDUNG

(11) **EP 1 398 577 A1**
(43) Veröffentlichungstag der Anmeldung: **17.03.2004**
(21) Anmeldenummer: 02019868.5
(22) Anmeldetag: 10.09.2002
(51) Int. Cl.: F24H 1/16, F24H 8/00

(54) **Hochdruckreinigungsgerät**

(71) Anmelder: Alfred Kärcher GmbH & Co. KG, 71364 Winnenden (DE)
(72) Erfinder: Eschrich, Sven, 73663 Berglen (DE); Schwaderer, Rudi, 71397 Leutenbach (DE)
(74) Vertreter: Böhme, Ulrich, Dr. Dipl.-Phys.

(57) **Zusammenfassung**

Um bei einem Hochdruckreinigungsgerät mit einer Heizeinrichtung für geförderte Flüssigkeit, welche Heizeinrichtung einen Gasbrenner, eine von den Brenngasen des Gasbrenners beaufschlagte Flüssigkeitsleitung, einen Gasbrenner und Flüssigkeitsleitung umgebenden, eine Brennkammer bildenden und von der zu fördernden Flüssigkeit durchströmten und dadurch gekühlten Mantel und eine gekühlte Bodenfläche aufweist, einen Betrieb in beliebigen Innenräumen zu ermöglichen, wird vorgeschlagen, daß die Brennkammer gasdicht abgeschlossen ist, daß der Gasbrenner gasdicht abgedichtet in die Brennkammer eintaucht und daß eine Rauchgasabfuhr gasdicht mit der Brennkammer verbunden ist.

## Beschreibung

Die Erfindung betrifft ein Hochdruckreinigungsgerät mit einer Heizeinrichtung für geförderte Flüssigkeit, welche Heizeinrichtung einen Gasbrenner, eine von den Brenngasen des Gasbrenners beaufschlagte Flüssigkeitsleitung, einen Gasbrenner und Flüssigkeitsleitung umgebenden, eine Brennkammer bildenden und von der zu fördernden Flüssigkeit durchströmten und dadurch gekühlten Mantel und eine gekühlte Bodenfläche aufweist.

Ein Hochdruckreinigungsgerät dieser Art ist beispielsweise aus der DE 10041154 A1 bekannt. Dieses Hochdruckreinigungsgerät wird über einen gas- oder ölbetriebenen Brenner beheizt, der außerhalb der Brennkammer angeordnet ist und seine Verbrennungsgase in die Brennkammer richtet. Die Brennkammer ist dabei nicht abgeschlossen, sondern sie steht mit der Umgebung in Verbindung. Aus diesem Grunde kann ein derartiger Brenner nur in einem Raum betrieben, der als Heizraum ausgebildet ist, der also bestimmte notwendige Belüftungsmöglichkeiten aufweist.

Es ist Aufgabe der Erfindung, ein gattungsgemäßes Hochdruckreinigungsgerät so auszugestalten, daß es auch in anderen Räumen betrieben werden kann, die nicht die Voraussetzungen eines Heizraumes erfüllen.

Diese Aufgabe wird bei einem Hochdruckreinigungsgerät der eingangs beschriebenen Art erfindungsgemäß dadurch gelöst, daß die Brennkammer gasdicht abgeschlossen ist, daß der Gasbrenner gasdicht abgedichtet in die Brennkammer eintaucht und daß eine Rauchgasabfuhr gasdicht mit der Brennkammer verbunden ist.

Auf diese Weise kann der gesamte Brennvorgang im Inneren der Brennkammer erfolgen, diese Brennkammer steht nur mit der Heizgaszufuhr und mit der Rauchgasabfuhr in Verbindung, und diese Heizgaszufuhr und die Rauchgasabfuhr können über Rohrleitungen mit der Außenwelt verbunden werden, so daß durch die gasdichte Abgeschlossenheit der Brennkammer ein solches Hochdruckreinigungsgerät in beliebigen Räumen eingesetzt werden kann.

Bei einer bevorzugten Ausführungsform ist vorgesehen, daß auch eine Zündeinrichtung für den Gasbrenner durch eine gasdichte Abdichtung hindurch in die Brennkammer eintritt.

Weiterhin kann vorgesehen sein, daß die Brennkammer einen Kondensatablauf aufweist, an den sich als Gasdichtung ein Siphon anschließt. Trotz der Öffnung des Brennkammerinnenraumes zur Kondensatleitung ist damit eine gasdichte Abdichtung der Brennkammer möglich.

Bei einer bevorzugten Ausführungsform ist vorgesehen, daß die Brennkammer einen Mantel und eine Bodenfläche umfaßt, die gegeneinander durch eine elastische Ringdichtung abgedichtet sind.

Es kann auch vorgesehen sein, daß eine Zufuhrleitung und / oder eine Abfuhrleitung der Flüssigkeitsleitung abgedichtet durch die Bodenfläche der Brennkammer geführt sind.

Dabei können die Zufuhrleitung und / oder die Abfuhrleitung mittels einer metallischen Ringdichtung gegenüber der Bodenfläche abgedichtet sein.

Bei einer weiteren bevorzugten Ausführungsform ist vorgesehen, daß der Gasbrenner und / oder eine Zündeinrichtung durch Dichtungen gegenüber der Brennkammer abgedichtet sind, die mit der geförderten Flüssigkeit vor deren Eintritt in die Flüssigkeitsleitung in Wärmekontakt stehen. Dadurch werden die Dichtungen während des gesamten Betriebs von der geförderten Flüssigkeit gekühlt, so daß ihre Dichtwirkung auch dann erhalten bleibt, wenn in der Brennkammer selbst hohe Temperaturen herrschen.

Besonders vorteilhaft ist es, wenn die Dichtungen an der Oberseite der Brennkammer angeordnet sind und wenn die Oberseite den Boden eines Flüssigkeitsbehälters ausbildet, der mit der Zufuhrleitung der Flüssigkeitsleitung in Verbindung steht. Man erhält somit auf der Oberseite der Brennkammer eine sehr wirksame Kühlung, die zusätzlich insbesondere die Dichtungen auf niederer Temperatur hält.

Der Mantel kann doppelwandig ausgebildet sein und sein Innenraum steht dann mit diesem Flüssigkeitsbehälter in Verbindung. Damit erhält man eine haubenförmige Kühlummantelung für die Brennkammer, die von der zu fördernden Flüssigkeit durchströmt und dadurch gekühlt wird.

Es ist vorteilhaft, wenn der Gasbrenner, die Zündeinrichtung und / oder die Rauchgasabfuhr abgedichtet durch den Flüssigkeitsbehälter hindurchgeführt sind.

Die nachfolgende Beschreibung bevorzugter Ausführungsformen der Erfindung dient im Zusammenhang mit der Zeichnung der näheren Erläuterung. Es zeigen:

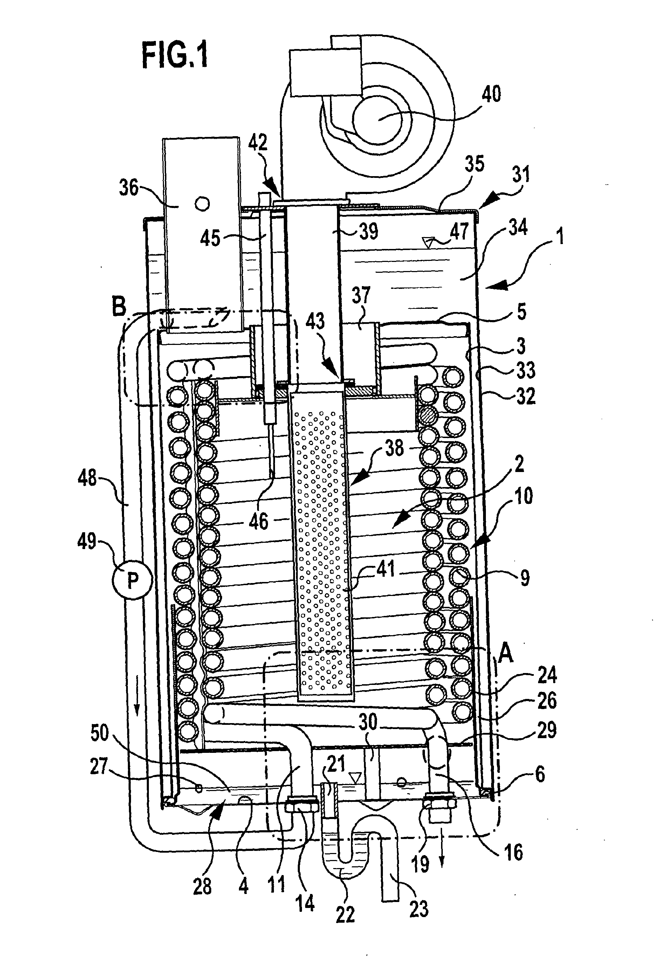

- Figur 1:: eine Längsschnittansicht durch die Heizeinrichtung eines Hochdruckreinigungsgerätes;
- Figur 2:: eine vergrößerte Detailansicht des Bereiches A in Figur 1 und

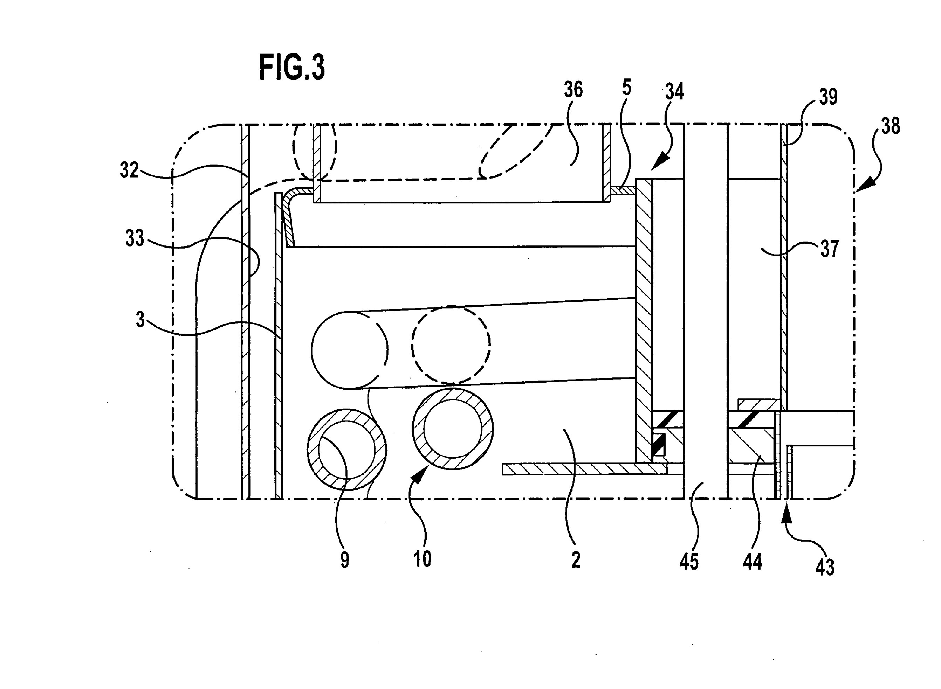

- Figur 3:: eine vergrößerte Detailsansicht des Bereiches B in Figur 1.

In der Zeichnung sind von dem Hochdruckreinigungsgerät nur die Teile dargestellt, die die Heizeinrichtung betreffen, dagegen sind andere üblicherweise bei Hochdruckreinigungsgeräten verwendete Teile wie Sprühlanzen, Dosiereinrichtungen, Chemikalienzufuhr etc. nicht dargestellt.

Die in der Zeichnung dargestellte Heizeinrichtung 1 weist eine zylindrische Brennkammer 2 auf, die durch eine zylindrische Seitenwand 3, eine Bodenfläche 4 und eine obere Deckelfläche 5 umgeben wird. Die Deckelfläche 5 ist an der Oberkante der Seitenwand 3 mit dieser dauerhaft abgedichtet verbunden, beispielsweise durch eine Verschweißung. Die Bodenfläche 4 und die Seitenwand 3 sind lösbar miteinander verbunden und durch eine elastische Ringdichtung 6 gegeneinander abgedichtet. Diese Ringdichtung 6 liegt einmal an der Oberseite der Bodenfläche 4 an und zum anderen an einem parallel dazu verlaufenden Abschnitt 7 einer nach außen gerichtete Abkröpfung 8 am unteren Ende der Seitenwand 3.

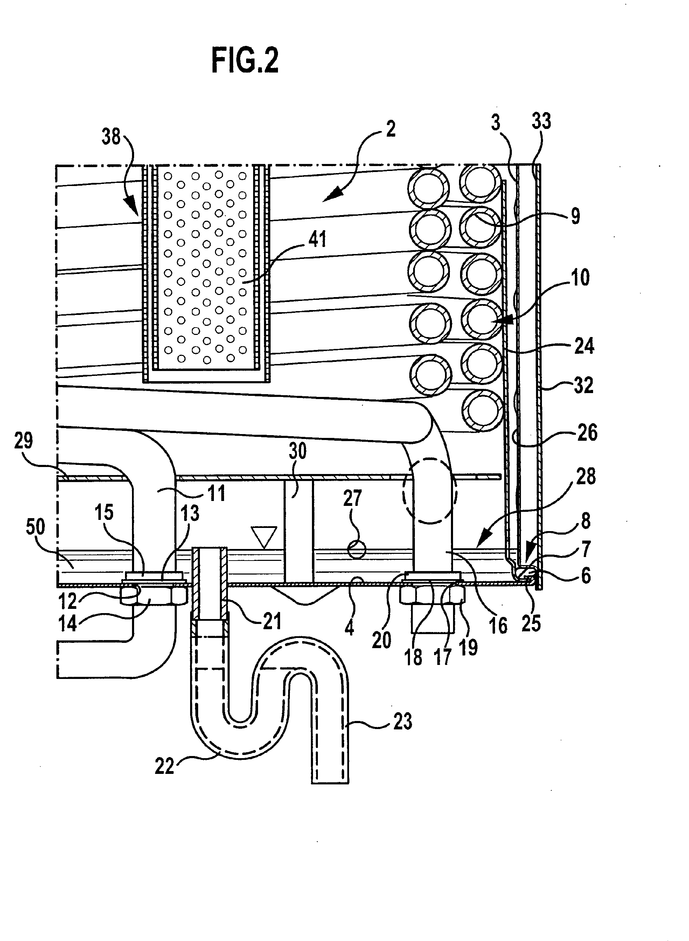

Im Inneren der Brennkammer 2 ist eine Flüssigkeitsleitung 9 in Form einer Doppelwendel 10 angeordnet, diese Doppelwendel 10 verläuft parallel zur zylindrischen Seitenwand 3 und reicht fast bis an diese heran. Eine Zufuhrleitung 11 zur Doppelwendel 10 ist abgedichtet durch eine Durchbrechung 12 in der Bodenfläche 4 hindurchgeführt, die Abdichtung erfolgt dabei durch einen metallischen Dichtring 13, der die Zufuhrleitung 11 umgibt und durch eine Dichtmutter 14 gegen eine Dichtfläche angedrückt wird (Figur 2).

In gleicher Weise wird die Abfuhrleitung 16 der Flüssigkeitsleitung 9 abgedichtet durch eine Durchbrechung 17 in der Bodenfläche 4 durch diese hindurchgeführt, die Abdichtung erfolgt auch hier durch einen metallischen Dichtring 18, der über eine Dichtmutter 19 gegen eine Dichtfläche 20 gedrückt wird.

In der Mitte der Bodenfläche 4 tritt ein Rohrstück 21 abgedichtet durch diese hindurch, die Abdichtung kann hier beispielsweise durch eine Verschweißung erfolgen. Das Rohrstück endet in einigem Abstand oberhalb der Bodenfläche 4, beispielsweise in einem Abstand von einigen Zentimetern, und es ist über einen Siphon 22 mit einem Abfluß 23 verbunden.

Parallel zu der zylindrischen Seitenwand 3 ist am unteren Ende der Brennkammer 2 eine seitliche Abschlußwand 24 angeordnet, die an ihrer Unterseite mit der Außenkante der Bodenfläche 4 abgedichtet verbunden ist, beispielsweise durch eine Umbördelung 25, und die zwischen sich und der Seitenwand 3 einen zylindrischen Ringraum 26 ausbildet, dessen Dicke in radialer Richtung etwa zwischen 0,5 % und 8 % des Durchmessers der Brennkammer 2 beträgt. Die seitliche Abschlußwand 24 zieht sich neben dem unteren Teil der Doppelwendel 10 an deren Außenseite anliegend so weit nach oben, daß etwa 1/4 bis 1/3 der Doppelwendel 10 von ihr umgeben wird.

In der seitliche Abschlußwand 24 sind über deren Umfang verteilt mehrere Öffnungen 27 angeordnet, die sich unterhalb des oberen Endes des Rohrstükkes 21 befinden und den Ringraum 26 mit dem oberhalb der Bodenfläche 4 angeordneten und von der seitlichen Abschlußwand 24 umgebenen Raum verbinden, der nachstehend als Kondensatsammelraum 28 bezeichnet wird. Dieser wird an seiner Oberseite von einer plattenförmigen Abdeckung 29 überfangen, die unterhalb der Doppelwendel 10 angeordnet ist und über eine Stütze 30 mit der Bodenfläche 4 verbunden ist.

Die Brennkammer 2 wird außenseitig von einer Haube 31 überfangen, deren zylindrische Seitenwand 32 die Seitenwand 3 der Brennkammer 2 in geringem Abstand konzentrisch umgibt und die an ihrem unteren Ende mit der Seitenwand 3 abgedichtet verbunden ist, beispielsweise durch eine Verschweißung (Figur 2). Die beiden Seitenwände 3 und 32 bilden zwischen sich einen sich über die gesamte Höhe der Brennkammer 2 erstreckenden Ringraum 33 aus, der in Verbindung steht mit einer Flüssigkeitskammer 34, die oberhalb der Brennkammer 2 durch die Deckelfläche 5 der Brennkammer 2 und durch die die Seitenwand 3 überragende Seitenwand 32 gebildet wird, diese Flüssigkeitskammer 34 wird an ihrer Oberseite von einem diese überfangenden Dekkel 35 verschlossen.

Aus der Brennkammer 2 führt eine Rauchgasableitung 36 abgedichtet durch die Flüssigkeitskammer 34 hindurch, diese Rauchgasableitung 36 beginnt an der Deckelfläche 5 der Brennkammer 2 und ist in diesem Bereich mit der Dekkelfläche 5 dauerhaft dicht verbunden, beispielsweise durch eine Verschweißung. Die Rauchgasableitung 36 tritt abgedichtet auch durch den Deckel 35 hindurch und kann dort mit einer in der Zeichnung nicht dargestellten ortsgebundenen Rauchgasableitung verbunden werden.

Im zentralen Bereich weist die Deckelfläche 5 eine in die Brennkammer 2 hineinragende Vertiefung 37 auf, durch den Boden 38 dieser Vertiefung 37 ist ein rohrförmiger Gasbrenner 38 in die Brennkammer 2 eingeführt, dieser Gasbrenner 38 durchsetzt mit einem geschlossenen Rohrabschnitt 39 abgedichtet die Flüssigkeitskammer 34 und steht außerhalb der Flüssigkeitskammer 34 mit einem Gebläse 40 in Verbindung, welches ein Gas-Luftgemisch in den Gasbrenner 38 fördert.

Im Inneren der Brennkammer 2 taucht der Gasbrenner 38 in das Zentrum der Doppelwendel 10 ein und erstreckt sich mit einem über seine gesamte Oberfläche perforierten Umfangsbereich 41 bis zum unteren Ende der Doppelwendel 10. Am unteren Ende ist der rohrförmige perforierte Umfangsbereich 41 verschlossen.

Die Durchführung 42 des Gasbrenners 38 durch den Deckel 35 ist abgedichtet ausgeführt, ebenso die Durchführung 43 des Gasbrenners 38 durch den Boden der Vertiefung 37. Dazu ist im Bereich der Durchführung 43 eine den Gasbrenner 38 umgebende Dichtung 44 vorgesehen, die gleichzeitig auch als Dichtung für eine die Flüssigkeitskammer 34 ebenfalls abgedichtet durchsetzende Zündeinrichtung 45 dient. Diese Zündeinrichtung 45 endet mit einer Zündelektrode 46 neben dem perforierten Umfangsbereich 41 des Gasbrenners 38.

Die Flüssigkeitskammer 34 steht über eine in der Zeichnung nicht dargestellte Zufuhrleitung mit einer Flüssigkeitsquelle in Verbindung, beispielsweise einer Wasserquelle, der Füllstand der Flüssigkeit im Inneren der Flüssigkeitskammer 34 wird durch eine in der Zeichnung ebenfalls nicht dargestellte und nur durch ein dreieckiges Symbol 47 markierte Füllstandskontrolle aufrecht erhalten. Es kann sich dabei beispielsweise um einen an sich bekannten Füllkasten mit Schwimmerventilbetätigung handeln. Die Flüssigkeit füllt damit die Flüssigkeitskammer 34 bis zu einem bestimmten Niveau und natürlich auch den mit ihr in Verbindung stehenden Ringraum 33, so daß die Brennkammer 2 dadurch von einem Kühlmantel umgeben wird, mit der Flüssigkeitsfüllung als Kühlmittel.

Eine Versorgungsleitung 48 führt aus der Flüssigkeitskammer 34 zu einer in der Zeichnung nur schematisch dargestellten Hochdruckpumpe 49, und diese fördert die Flüssigkeit unter hohem Druck zu der Zufuhrleitung 11, über die die unter hohem Druck stehende Flüssigkeit durch die Doppelwendel 10 geleitet wird. An die Abfuhrleitung 16 der Doppelwendel 10 schließt sich in an sich bekannter Weise eine zu einer Sprühlanze oder einer Sprühpistole führende Hochdruckleitung an, die in der Zeichnung nicht dargestellt ist.

Der in der Zeichnung dargestellte Gasbrenner 38 ist ein Oberflächenbrenner, in dem perforierten Rohrabschnitt 39 strömt durch dessen Perforationen ein Brenngas-Luftgemisch aus, dieses verbrennt außerhalb des perforierten Umfangsbereichs 41 und beaufschlagt dadurch die Doppelwendel 10 gleichmäßig über deren Höhe mit heißen Brenngasen. Die Rauchgase werden anschließend aus der Brennkammer 2 über die Rauchgasableitung 36 abgeführt.

Die Brennkammer 2 ist bei dieser Ausgestaltung gasdicht abgeschlossen, so daß die Brenngas-Luftmischung nur durch den Gasbrenner 38 abgedichtet in die Brennkammer 2 eintreten kann, während die Rauchgase nur abgedichtet über die Rauchgasableitung 36 nach außen gelangen können, alle anderen Durchführungen der Brennkammer 2 sind so gasdicht abgesichert, daß keine Verbindung zur Umgebung besteht. Es ist dadurch möglich, die Heizeinrichtung 1 auch in Räumen zu benutzen, die nicht als Heizräume ausgestaltet sind.

Die heißen Brenngase treffen auch auf die Seitenwand 3 der Brennkammer 2, diese Seitenwand 3 ist eine Seitenwand des Ringraums 33 und wird dadurch durch die Flüssigkeitsfüllung des Ringraums 33 gekühlt. An der Innenseite der Seitenwand 3 kondensiert daher ein Teil der Brenngase, und das kondensierte Wasser läuft an der Innenseite der Seitenwand 3 nach unten bis in den von der seitlichen Abschlußwand 24 gebildeten Ringraum 26, der als Sammelraum für das Kondensat wirkt. Sobald der Ringraum 26 eine gewisse Menge Kondensat gesammelt hat, tritt dies durch die Öffnungen 27 in den Kondensatsammelraum 28 ein und bedeckt die gesamte Bodenfläche 4 mit einer Kondensatschicht 50, deren Höhe durch die Höhe des Rohrstückes 21 bestimmt wird. Sobald mehr Kondensat in die Kondensatschicht 50 eingeführt wird, fließt ein Teil des Kondensates durch das Rohrstück 21 zum Abfluß 23, der Siphon 22 schließt dabei die Brennkammer 2 gasdicht ab, so daß auch in diesem Bereich die Gasdichtigkeit der Brennkammer 2 gewährleistet ist.

Die Kondensatschicht 50 kühlt die Bodenfläche 4, so daß die Brennkammer 2 bei der beschriebenen Konstruktion allseitig flüssigkeitsgekühlte Außenwände aufweist, im Bereich der Seitenwand 3 durch den flüssigkeitsgefüllten Ringraum 33, an der Oberseite durch die ebenfalls flüssigkeitsgefüllte Flüssigkeitskammer 34 und im Bereich der Bodenfläche 4 durch die Kondensatschicht 50.

## Patentansprüche

1. Hochdruckreinigungsgerät mit einer Heizeinrichtung für geförderte Flüssigkeit, welche Heizeinrichtung einen Gasbrenner, eine von den Brenngasen des Gasbrenners beaufschlagte Flüssigkeitsleitung, einen Gasbrenner und Flüssigkeitsleitung umgebenden, eine Brennkammer bildenden und von der zu fördernden Flüssigkeit durchströmten und dadurch gekühlten Mantel und eine gekühlte Bodenfläche aufweist, **dadurch gekennzeichnet, daß** die Brennkammer (2) gasdicht abgeschlossen ist, daß der Gasbrenner (38) gasdicht abgedichtet in die Brennkammer (2) eintaucht und daß eine Rauchgasabfuhr (36) gasdicht mit der Brennkammer (2) verbunden ist.

2. Hochdruckreinigungsgerät nach Anspruch 1, **dadurch gekennzeichnet, daß** eine Zündeinrichtung (45) für den Gasbrenner (38) durch eine gasdichte Abdichtung (44) hindurch in die Brennkammer (2) eintritt.

3. Hochdruckreinigungsgerät nach Anspruch 1 oder 2, **dadurch gekennzeichnet, daß** die Brennkammer (2) einen Kondensatablauf (21) aufweist, an den sich als Gasdichtung ein Siphon (22) anschließt.

4. Hochdruckreinigungsgerät nach einem der voranstehenden Ansprüche, **dadurch gekennzeichnet, daß** die Brennkammer (2) einen Mantel (3, 32) und eine Bodenfläche (4) umfaßt, die gegeneinander durch eine elastische Ringdichtung (6) abgedichtet sind.

5. Hochdruckreinigungsgerät nach einem der voranstehenden Ansprüche, **dadurch gekennzeichnet, daß** eine Zufuhrleitung (11) und / oder eine Abfuhrleitung (16) der Flüssigkeitsleitung (9) abgedichtet durch die Bodenfläche (4) der Brennkammer (2) geführt sind.

6. Hochdruckreinigungsgerät nach Anspruch 5, **dadurch gekennzeichnet, daß** die Zufuhrleitung (11) und / oder die Abfuhrleitung (16) mittels einer metallischen Ringdichtung (12, 17) gegenüber der Bodenfläche (4) abgedichtet sind.

7. Hochdruckreinigungsgerät nach einem der voranstehenden Ansprüche, **dadurch gekennzeichnet, daß** der Gasbrenner (38) und / oder eine Zündeinrichtung (45) durch Dichtungen (44) gegenüber der Brennkammer (2) abgedichtet sind, die mit der geförderten Flüssigkeit vor deren Eintritt in die Flüssigkeitsleitung (9) in Wärmekontakt stehen.

8. Hochdruckreinigungsgerät nach Anspruch 7, **dadurch gekennzeichnet, daß** die Dichtungen (44) an der Oberseite (5) der Brennkammer (2) angeordnet sind und daß die Oberseite (5) den Boden eines Flüssigkeitsbehälters (34) ausbildet, der mit der Zufuhrleitung (48) der Flüssigkeitsleitung (9) in Verbindung steht.

9. Hochdruckreinigungsgerät nach Anspruch 8, **dadurch gekennzeichnet, daß** der Mantel (3, 32) doppelwandig ausgebildet ist und sein Innenraum (33) mit dem Flüssigkeitsbehälter (34) in Verbindung steht.

10. Hochdruckreinigungsgerät nach einem der Ansprüche 8 oder 9, **dadurch gekennzeichnet, daß** der Gasbrenner (38), die Zündeinrichtung (45) und / oder die Rauchgasabfuhr (36) abgedichtet durch den Flüssigkeitsbehälter (34) hindurchgeführt sind.
